# EUROPÄISCHE PATENTANMELDUNG

(11) **EP 3 410 577 A1**
(43) Veröffentlichungstag der Anmeldung: **05.12.2018**
(21) Anmeldenummer: 17174312.3
(22) Anmeldetag: 02.06.2017
(51) Int. Cl.: H02K 5/136, H01R 13/527, H02K 5/22, H01R 13/52, H02G 3/22, H02G 15/013, H01B 17/30, H01B 17/56, H01R 13/533

(54) **LEITUNGSDURCHFÜHRUNG**

(71) Anmelder: Siemens Aktiengesellschaft, 80333 München (DE)
(72) Erfinder: Meyer, Johannes, 84364 Bad Birnbach (DE); Mutzl, Thomas, 94167 Tettenweis (DE); Schneider, Josef Sebastian, 94544 Hofkirchen (DE)

(57) **Zusammenfassung**

Die Erfindung betrifft eine Leitungsdurchführung (1) in einem Gehäuse (2) einer elektrischen Maschine (1) in explosiven Atmosphären, mit einer Gewindebuchse (100) und einem Anschlussbolzen (200), wobei die Gewindebuchse (100) ein Isolator ist und in einer Ausnehmung des Gehäuses (2) positioniert, insbesondere eingeschraubt ist, wobei der Anschlussbolzen (200) aus elektrisch leitfähigen Material ist und zumindest abschnittsweise mit einem Gewinde versehen ist, wobei an dem Anschlussbolzen (200) an beiden Enden Anschlussmöglichkeiten (206) für Leitungen oder Litzen vorhanden sind, wobei der Anschlussbolzen (200) in die Gewindebuchse (100) einschraubbar ist.

## Beschreibung

Die Erfindung betrifft eine Leitungsdurchführung in einer dynamoelektrischen Maschine, die in explosiven Atmosphären betrieben werden soll.

Hierzu muss die dynamoelektrische Maschine und deren Anbauteile Angaben erfüllen, die in der DIN EN 60079-0 aufgeführt sind. Demnach erlauben Ex-d Motoren eine Explosion im Inneren des Motors. Es muss lediglich gewährleistet sein, dass kein Funke bzw. Flammen durch Öffnungen des Gehäuses der dynamoelektrischen Maschine nach außen treten können. Um dies zu verhindern werden sogenannte Zündspalte vorgesehen, in denen das entzündete Gas soweit abkühlt bis es erlischt und somit nach außen keine schädliche Wirkung entfalten kann.

Es muss aber dennoch gewährleistet sein, dass die dynamoelektrische Maschine über Energieversorgungsleitungen mit Spannung und Strom versorgt wird, so dass eine elektrische Verbindung zwischen dem Inneren und dem Äußeren der dynamoelektrischen Maschine hergestellt werden muss. Auch diese Leitungsdurchtritte müssen, damit die gesamte dynamoelektrische Maschine den Anforderungen des Explosionsschutzes genügt, ebenso diesen Anforderungen erfüllen.

Bei bisherigen Leitungsdurchführungen von Ex-d Motoren wird eine Gewindebuchse in ein Gehäuse des Motors eingeschraubt. Durch diese Verschraubung mit dem Gehäuse entsteht ein Zündspalt in Form eines Gewindespaltes. Die verschiedenen Arten von Zündspalten sind in der Norm DIN EN 60079-1 aufgeführt und mit den dort vorgeschriebenen Mindestmaßen versehen.

Die Stromführung von außen nach innen wird bisher durch einen Bolzen realisiert, der dabei zwischen seiner Gewindebuchse und seiner Oberfläche einen zylindrischen Spalt aufweist. Dieser Spalt ist auf hohe Toleranzen exakt zu arbeiten, um die Weite des Spaltes und damit den Zündspalt zu beeinflussen und in seinen geometrischen Abmessungen möglichst gering zu halten.

Ausgehend davon, liegt der Erfindung die Aufgabe zugrunde eine Leitungsdurchführung bereitzustellen, die mit vergleichsweise weniger Aufwand und Herstellungskosten die erforderlichen Zündspalte einer dynamoelektrischen Maschine, insbesondere eines Motors, insbesondere gemäß der oben genannten Norm einhält.

Die Lösung der gestellten Aufgabe gelingt durch eine Leitungsdurchführung in einem Gehäuse einer dynamoelektrischen Maschine in explosiven Atmosphären, mit einer Gewindebuchse und einem Anschlussbolzen, wobei die Gewindebuchse ein Isolator ist und in einer Ausnehmung des Gehäuses positioniert, insbesondere eingeschraubt ist, wobei der Anschlussbolzen aus elektrisch leitfähigen Material ist und zumindest abschnittsweise mit einem Gewinde versehen ist, wobei an dem Anschlussbolzen an beiden Enden Anschlussmöglichkeiten für Leitungen oder Litzen vorhanden sind, wobei der Anschlussbolzen in die Gewindebuchse einschraubbar ist.

Die Lösung der gestellten Aufgabe gelingt auch durch eine dynamoelektrische Maschine mit einer Leitungsdurchführung.

Erfindungsgemäß ist nunmehr der Anschlussbolzen mit einem Gewinde versehen, ebenso wie die Gewindebuchse mit einem Gewinde versehen ist, um im Gehäuse des Motors befestigt zu werden.

Durch diese erfindungsgemäße Ausführung der Leitungsdurchführung mit zwei Gewindespalten wird die Anzahl, als auch die Länge der Zündspalte erhöht, so dass ein eventuell entzündetes Gas im inneren der dynamoelektrischen Maschine über die Spalte abgekühlt wird bis es erlischt.

Durch den erfindungsgemäßen Aufbau der Leitungsdurchführung wird außerdem der gesamte in Anspruch genommene Bauraum dieser Leitungsdurchführung reduziert. Die Abmessungen eines Gewindespalts sind bei einer vorgegebenen Länge, z.B. einer Gehäusewandung wesentlich länger als die Maße eines zylindrischen Spalts. Des Weiteren ist die Herstellung eines Gewindes wesentlich kostengünstiger als die Herstellung eines langen vergleichsweise hoch tolerierten zylindrischen Bolzens, der sehr aufwändig herzustellen ist. Auch die Spaltweite innerhalb eines Gewindes ist wesentlich einfacher herzustellen. Insofern lassen sich Gewinde wesentlich kostengünstiger herstellen und auf ihre Maßhaltigkeit einfacher überprüfen.

Erfindungsgemäß weist eine dynamoelektrische Maschine nunmehr an einer Leitungsdurchführung einen elektrisch leitenden Anschlussbolzen, z.B. aus Kupfer auf, der mit dem Inneren der Maschine, also z.B. dem Wicklungssystem oder Sensorleitungen elektrisch leitend verbunden ist. Nach außen werden an den Anschlussbolzen Energieversorgungsleitungen oder Sensorleitungen angeschlossen. Der Anschlussbolzen wird über einer elektrisch isolierenden Gewindebuchse am Gehäuse einer dynamoelektrischen Maschine positioniert und fixiert.

Die Erfindung sowie die vorteilhafte Ausgestaltung der Erfindung werden anhand folgender Ausführungsbeispiele näher erläutert; darin zeigen:
- FIG 1: eine Seitenansicht einer Gewindebuchse,
- FIG 2: einen Schnitt durch eine Gewindebuchse,
- FIG 3: eine Seitenansicht eines Anschlussbolzens,
- FIG 4: einen Schnitt durch einen Anschlussbolzen,
- FIG 5: einen zusammengebauten Zustand von Anschlussbolzen und Gewindebuchse,
- FIG 6: einen Schnitt durch den zusammengebauten Zustand von Anschlussbolzen und Gewindebuchse,
- FIG 7: einen Längsschnitt einer dynamoelektrischen Maschine mit einer derartigen Leitungsdurchführung.

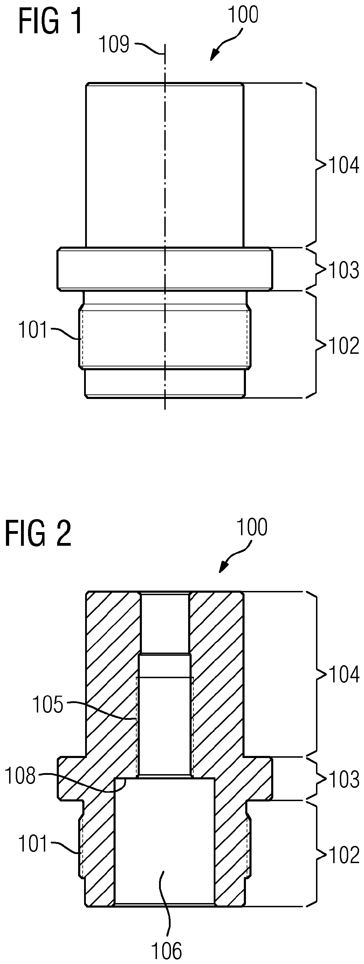

FIG 1 zeigt in einer Seitendarstellung eine Gewindebuchse 100, die in mehrere Abschnitte unterteilbar ist. Diese Abschnitte sind ein unterer Abschnitt 102, ein Kragen 103 und ein oberer Abschnitt 104.

Die Gewindebuchse 100 ist rotationssymmetrisch bezüglich ihrer Achse 109. Im unteren Abschnitt 102 ist auf einer vorgebbaren axialen Länge dieses Abschnitts 102 ein Außengewinde 101 vorgesehen. Über dieses Außengewinde 101 wird, wie später dargestellt, die Gewindebuchse 100 im Gehäuse 2 einer dynamoelektrischen Maschine 1 fixiert.

FIG 2 zeigt im Längsschnitt die Gewindebuchse 100, mit ihren Abschnitten 102, 103 und 104, wobei die Gewindebuchse 100 im unteren Abschnitt 102, als auch auf einem gewissen vorgebbaren axialen Abschnitt des Kragens 103 eine Ausnehmung 106 aufweist. Im verbleibenden Abschnitt des Kragens 103 als auch im oberen Abschnitt 104 ist eine weitere Ausnehmung vorgesehen, die zumindest über einen axialen Teil dieser Abschnitte 103 und 104 ein Innengewinde 105 aufweist.

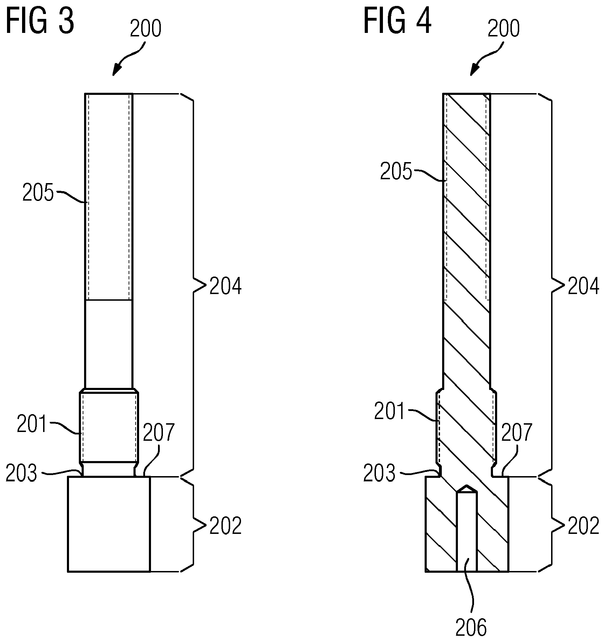

FIG 3 zeigt einen Anschlussbolzen 200 mit einem unteren Abschnitt 202, der eine Anschlagschulter 207 aufweist und in einen Übergang zum oberen Abschnitt 204 einen Einstich 203 aufweist. Im oberen Abschnitt 204 sind zwei Außengewinde vorgesehen. Ein Außengewinde 201 im unteren Teil des oberen Abschnitts 204 und ein Außengewinde 205 im oberen Teil des oberen Abschnitts 204. Wobei in dieser Ausführung das Außengewinde 201 einen größeren Durchmesser aufweist, als das Außengewinde 205.

FIG 4 zeigt im Längsschnitt des Anschlussbolzens 200 im unteren Abschnitt 202 eine Anschlussmöglichkeit 206 für Leitungen und Litzen z.B. zur elektrischen Versorgung der dynamoelektrischen Maschine. Des Weiteren sind auch in dieser Darstellung die beiden Außengewinde 205 und 201 im oberen Abschnitt 204 des Anschlussbolzens 200 dargestellt.

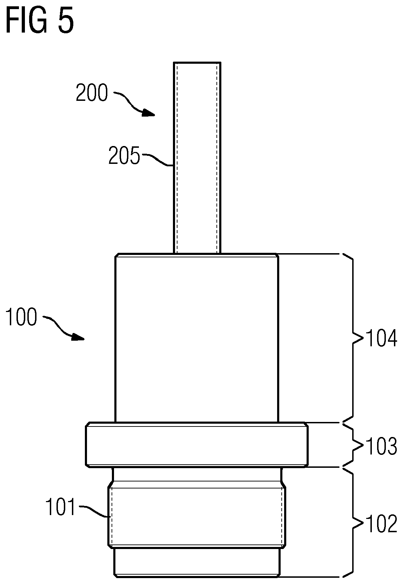

FIG 5 zeigt im zusammengebauten Zustand die Gewindebuchse 100 mit dem Anschlussbolzen 200, der in die Gewindebuchse 100 eingedreht wurde. Im oberen Abschnitt des Anschlussbolzens 200 ist das Außengewinde 205 zu sehen.

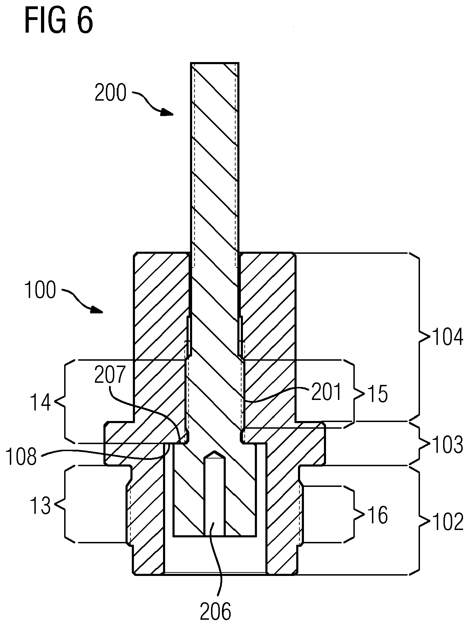

FIG 6 zeigt in einem Längsschnitt des zusammengebauten Zustands nach FIG 5 die Gewindebuchse 100 und den Anschlussbolzen 200. Durch das Einschrauben des Anschlussbolzens 200 in die Gewindebuchse 100 oder das Einschrauben der Gewindebuchse 100 in den Anschlussbolzen 200 und den damit verbundenen Anschlag 207 an der Schulter 108 wird durch das Gewinde 201 ein Zündspalt mit seiner maximalen Einschraubtiefe 14 gebildet.

Diese Schraubverbindung weist eine axiale Gewindelänge 15 im Eingriff des Anschlussbolzens 200 in der Gewindebuchse 100 auf.

Des Weiteren ist ebenso eine maximale Einschraubtiefe 13 der Gewindebuchse im Gehäuse 2 vorgesehen. Diese Schraubverbindung weist eine axiale Gewindelänge 16 im Eingriff der Gewindebuchse 100 in einem Gehäuse 2 auf.

Am Außengewinde 205 im oberen Teil des oberen Abschnitts 204 des Anschlussbolzens 200 kann eine nicht näher dargestellte Kontermutter z.B. zur Positionierung und Fixierung gesetzt werden.

Dabei sind die Zündspalte aufgrund der an sich bekannten Gewindegestaltungen wesentlich länger als die axialen Gewindelängen 15, 16. Auch die Weite des Zündspaltes wird durch diese Schraubverbindung von Anschlussbolzen 200 und Gewindebuchse 100 und/oder Gewindebuchse 100 und Gehäuse 2 vergleichsweise eng.

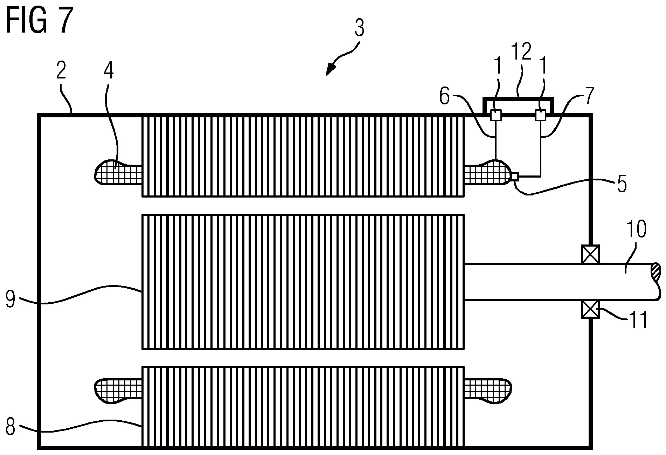

FIG 7 zeigt einen prinzipiellen Längsschnitt einer dynamoelektrischen Maschine 3. Die Leitungen eines Anschlusskastens 12 sind Energieversorgungsleitungen 6 und/oder Sensorleitungen 7, die als Leitungsdurchführung 1 durch das Gehäuse 2 der dynamoelektrischen Maschine 3 führt. Energieversorgungsleitungen 6 sind für das Wicklungssystem 4 der dynamoelektrischen Maschine 3 notwendig, die im Stator 8 ein elektromagnetisches Feld generieren und durch elektromagnetische Wechselwirkungen mit einem Rotor 9 zu einer Drehung der Welle 10 führen, die über Lager 11 am Gehäuse 2 abgestützt ist.

Die Leitungen sind mit dem oder den Anschlussbolzen 200, die elektrisch leitend ausgeführt sind elektrisch leitend kontaktiert.

Die Gewindebuchse 100 ist aus elektrisch isolierendem Material.

## Patentansprüche

1. Leitungsdurchführung (1) in einem Gehäuse (2) einer dynamoelektrischen Maschine (1) in explosiven Atmosphären, mit einer Gewindebuchse (100) und einem Anschlussbolzen (200), wobei die Gewindebuchse (100) ein Isolator ist und in einer Ausnehmung des Gehäuses (2) positioniert, insbesondere eingeschraubt ist, wobei der Anschlussbolzen (200) aus elektrisch leitfähigen Material ist und zumindest abschnittsweise mit einem Gewinde versehen ist, wobei an dem Anschlussbolzen (200) an beiden Enden Anschlussmöglichkeiten (206) für Leitungen oder Litzen vorhanden sind, wobei der Anschlussbolzen (200) in die Gewindebuchse (100) einschraubbar ist.

2. Leitungsdurchführung (1) nach Anspruch 1, **dadurch gekennzeichnet, dass** die Gewindehöhe von Gewindebuchse (100) und Anschlussbolzen (200) gleich sind.

3. Leitungsdurchführung (1) nach Anspruch 1 oder 2, **da** - **durch gekennzeichnet,** dass die Gewindelänge (15) im Eingriff des Anschlussbolzen (200) in der Gewindebuchse (100) größer ist, als die Gewindelänge (16) im Eingriff von Gewindebuchse (100) im Gehäuse (2).

4. Dynamoelektrische Maschine (3) für explosive Umgebungen mit zumindest einer Leitungsdurchführung (1) nach einem der vorhergehenden Ansprüche.

5. Elektrische Maschine (3) nach Anspruch 4, **dadurch gekennzeichnet, dass** die Leitungen als Energieversorgungsleitung 6 und/oder Sensorleitung 7 und/oder Datenleitung ausgebildet sind.
